# EUROPEAN PATENT APPLICATION

(11) **EP 4 683 205 A1**
(43) Date of publication of application: **21.01.2026**
(21) Application number: 23928894.7
(22) Date of filing: 19.12.2023
(51) Int. Cl.: H02P 5/74, H02P 1/54, H02P 1/10, H02P 25/18, H02P 27/04, H02M 5/45

(54) **SOFT START CONTROL METHOD FOR MULTIPLE MOTORS, AND INVERTER USING SAME**

(30) Priority: 17.03.2023 KR 20230035124
(71) Applicant: LS Electric Co., Ltd., Gyeonggi-do 14119 (KR)
(72) Inventor: BAE, Chaebong, Anyang-si, Gyeonggi-do 14118 (KR)
(74) Representative: K&L Gates LLP
(86) International application number: PCT/KR2023/020924
(87) International publication number: WO 2024/195971

(57) **Abstract**

The present invention relates to a soft start control method for multiple motors, and an inverter using same. The inverter according to an embodiment of the present invention is an inverter which converts supplied alternating current into three-phase ((U, V, W)) alternating current and outputs same, the inverter comprising: 2n relays which operate on/off of respective output switches; and a control unit which controls the respective relays to operate the on/off of the respective output switches so as to control respective motors to be connected to the three phases ((U, V, W)) of the inverter or connected to three phases ((R, S, T)) of an alternating current power source unit.

## Description

### [Technical Field]

The present invention relates to inverter control technology for multiple motors, and more particularly, to inverter control technology capable of implementing soft start for multiple motors.

### [Background Art]

An inverter is a power conversion device that converts an input alternating current (AC) power source into an AC power source having a predetermined frequency and supplies the converted power to a motor. That is, the inverter may convert an input three-phase AC power source into direct current (DC), and then convert the DC power into three-phase alternating current (AC) to supply it to the motor. At this time, the inverter may output a voltage and frequency adjusted according to given conditions to the motor.

Meanwhile, in application fields such as fans or pumps, where flow rate or hydraulic pressure is controlled, multi-motor control technology, which controls multiple motors based on a single inverter, is widely used. Such multi-motor control technology not only minimizes energy consumption, but also reduces the total cost of ownership (TCO) of the overall system, thereby achieving cost reduction in equipment installation.

For example, in a piping system configured to control multiple motors connected to a single inverter, it is common to perform proportional-integral-derivative (PID) control using the pressure in the piping as a feedback value. In this case, even if the speed of the main motor, which is directly connected to and operated by the inverter, exceeds the target speed set by the operator, if the feedback value of the piping is below a preset reference value, one or more auxiliary motors connected through relays are additionally driven to generate the pressure required by the system.

In this case, the method of additionally connecting an auxiliary motor may include a direct-on-line (DOL) starting method in which a commercial AC power source is directly connected to the motor using an output switch, or a star-delta soft starter method in which the winding of the induction motor is connected in a star configuration during starting and converted to a delta configuration during operation using three output switches.

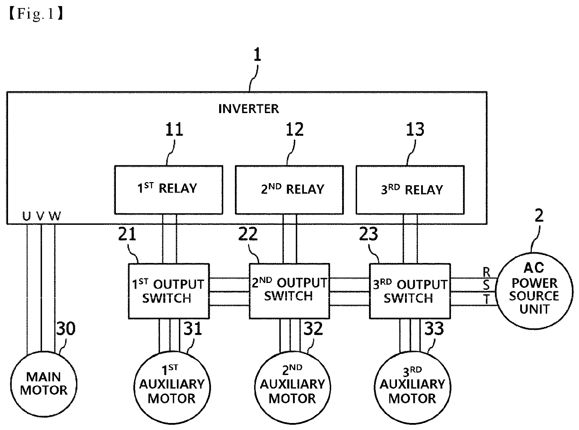

FIG. 1 illustrates a schematic block diagram of an inverter system using a direct-on-line starting method according to the related art.

Referring to FIG. 1, an inverter system using a direct-on-line starting method according to the related art includes an inverter 1, a commercial AC power source unit 2, a plurality of output switches 21, 22, and 23, a main motor 30, and a plurality of auxiliary motors 31, 32, and 33. Accordingly, the main motor 30 is fixedly controlled by the inverter 1, and each of the auxiliary motors 31, 32, and 33 may be connected to the AC power source unit 2 by the respective relays 11, 12, and 13 of the inverter 1.

That is, the inverter 1 controls the main motor 30 through the power-converted three-phase U, V, W output. The inverter 1 also includes each relay 11, 12, and 13 that drives the on/off operation of the respective output switches 21, 22, and 23. At this time, the inverter 1 may control the on/off operation of the respective output switches 21, 22, and 23 by controlling the operation of each relay 11, 12, and 13.

Cables connecting each of the auxiliary motors 31, 32, and 33 to the AC power source unit 2 are provided with respective output switches 21, 22, and 23. For example, each output switch 21, 22, and 23 may be implemented using a magnetic contactor (M/C) or the like. That is, the cable connecting first motorfirst auxiliary motor 31 to the three phases (R, S, T) of the AC power source unit 2 is provided with first output switch 21, the cable connecting second motorsecond auxiliary motor 32 to the three phases (R, S, T) of the AC power source unit 2 is provided with second output switch 22, and the cable connecting third motorthird auxiliary motor 33 to the three phases (R, S, T) of the AC power source unit 2 is provided with third output switch 23.

When the system according to FIG. 1 is applied to a piping system, the inverter 1 performs PID control on a single main motor 30 based on a feedback value corresponding to the pressure in the piping. At this time, even if the operating speed of the main motor 30 exceeds the speed set by the user, the feedback value may still be lower than the reference value set by the user. In this case, it is determined that the main motor 30 cannot generate the pressure required by the system, and the auxiliary motors 31, 32, and 33 are driven in a predetermined sequence.

At this time, when the auxiliary motors 31, 32, and 33 are driven, the operations of each relay 11, 12, and 13 are controlled so that the respective output switches 21, 22, and 23 are turned on, whereby the respective auxiliary motors 31, 32, and 33 are connected to the AC power source unit 2 and can perform direct-on-line starting.

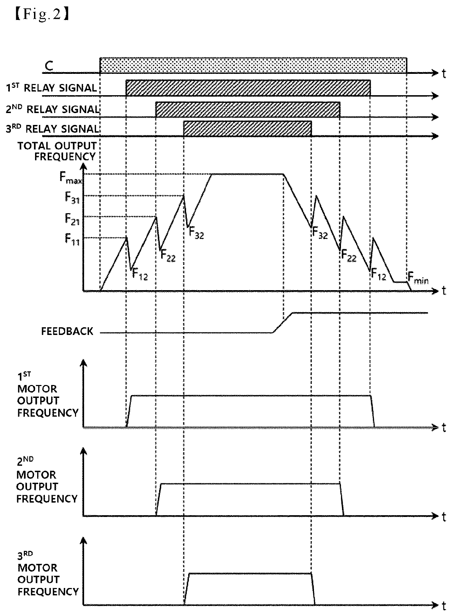

FIG. 2 illustrates an operation diagram of the direct-on-line starting performed in the system of FIG. 1.

Referring to FIG. 2, the detailed description of the direct-on-line starting is as follows.
1) An operation command (C) is input to the inverter 1.
2) Since the feedback value is low, the operating frequency of the main motor 30 controlled by the inverter 1 begins to accelerate.
3) When the operating frequency of the main motor 30 controlled by the inverter 1 reaches a maximum frequency F11 and the feedback value is still lower than the preset reference value, the inverter 1 activates first relay 11 to turn on first output switch 21, so that first motorfirst auxiliary motor 31 is connected to the AC power source unit 2 and performs direct-on-line starting.
4) As first motorfirst auxiliary motor 31 is turned on, the inverter 1 decreases the operating frequency of the main motor 30 it controls, in order to prevent the pressure of the entire system from rising rapidly.
5) Steps 2 to 4 above are repeatedly performed until all the remaining auxiliary motors 32 and 33 are turned on.
6) When the feedback value becomes greater than the reference value, the inverter 1 begins to reduce the operating frequency of the main motor 30.
7) When the overall operating frequency reaches F32 and the feedback value is greater than the reference value, the inverter 1 activates third relay 13 to turn off third output switch 23, so that third motorthird auxiliary motor 33 is disconnected from the AC power source unit 2 and stops after performing a free-run operation.
8) As third motor 33 turns off, the inverter 1 increases the operating frequency of the main motor 30 it controls in order to prevent a rapid drop in the overall system pressure.
9) Steps 6) to 8) above are repeatedly performed until all the auxiliary motors 32 and 31 are turned off.

That is, the output frequency of the inverter 1 varies according to changes in the feedback value, and the operations described in steps 2) to 9) above may be performed in combination based on the varying output frequency.

However, such a direct-on-line starting method causes a large inrush current when directly starting the auxiliary motors 31, 32, 33, which may damage the auxiliary motors 31, 32, 33 as well as the contact portions of the output switches 21, 22, 23. In addition, the direct-on-line starting method has a problem in that a rapid increase in flow rate during the direct-on-line starting leads to an increase in pressure in the piping, thereby causing significant stress on the piping.

To address this, an additional device may be provided to enable soft start, or a star-delta soft starter method may be used to switch the winding configuration of the auxiliary motors depending on the situation. However, these methods have the drawback of requiring additional space for hardware installation and increasing equipment costs.

In particular, although the star-delta soft starter method reduces the inrush current issue, it requires as many as three output switches, along with the use of additional components such as timers and auxiliary switches. Furthermore, in some cases, motors may not support switching between star and delta configurations, making this method unsuitable for all applications.

That is, in the case of three-phase 380V or 440V motors, they are typically designed to operate in a delta configuration when powered by a 220V source, and in a star configuration when powered by a 380V or 440V source. Therefore, motors operating on a 220V power supply can use star-delta starting. However, for 380V or 440V power supplies, the rated voltage is directly applied to the motor windings, so a specially designed motor is required for such conditions.

However, the above-described description merely provides background information about the present invention and does not correspond to the previously disclosed technology.

### [DISCLOSURE]

### [TECHNICAL PROBLEM]

In order to solve the problems of the related art, the present invention is directed to providing inverter control technology capable of implementing a new type of soft start for multiple motors.

That is, the present invention is directed to providing inverter control technology that enables soft start operation for each motor without requiring additional measures for soft start, thereby preventing damage to the motors and the contact portions of the output switches caused by large inrush currents during direct-on-line starting.

In addition, the present invention is directed to providing a soft start technology for multiple motors which, when applied to a piping system, can prevent sudden changes in flow rate within the piping and thereby eliminate stress on the piping caused by pressure increase.

The technical problems to be achieved in the present invention are not limited to the technical problems mentioned above, and other technical problems not mentioned will be clearly understood by those of ordinary skill in the art from the following description.

### [TECHNICAL SOLUTION]

In order to solve the above problems, according to an embodiment of the present invention, an inverter in a system including n motors (where n is a natural number of 2 or more) and 2n output switches, in which two different output switches are exclusively connected to each motor, the inverter being configured to convert supplied alternating current into three-phase alternating current (U, V, W) and output the same, includes 2n relays configured to operate on/off states of the respective output switches; and a control unit configured to control the respective relays to operate the on/off states of the respective output switches so that each motor is connected to either the three-phase (U, V, W) output of the inverter or the three-phase (R, S, T) output of an AC power source unit, wherein the control unit controls the relays such that, at the start of operation of a motor in a stopped state, the corresponding motor is connected to the three-phase (U, V, W) output of the inverter.

When it is necessary to start the operation of a second motor while a first motor is currently connected to the three-phase (U, V, W) output of the inverter, the control unit may control the relays such that the connection of the first motor is switched to the three-phase (R, S, T) output of the AC power source unit, and then the second motor is connected to the three-phase (U, V, W) output of the inverter.

The control unit may control the relays such that the two output switches dedicated to a single motor are not turned on at the same time.

The control unit may receive, as a feedback value, a sensor value related to a condition of a target system to which the inverter is applied, and the case in which it is necessary to start the operation of the second motor may be a case where the feedback value remains less than a preset reference value even though the first motor currently connected to the three-phase (U, V, W) output of the inverter is operating at a maximum frequency.

The 2n relays may include a first relay configured to operate a first output switch provided between a first motor and the three-phase (R, S, T) output of the AC power source unit; a second relay configured to operate a second output switch provided between the first motor and the three-phase (U, V, W) output of the inverter; a third relay configured to operate a third output switch provided between a second motor and the three-phase (R, S, T) output of the AC power source unit; and a fourth relay configured to operate a fourth output switch provided between the second motor and the three-phase (U, V, W) output of the inverter.

When it is necessary to start the operation of the second motor while the first motor is currently connected to the three-phase (U, V, W) output of the inverter, the control unit may perform a first operation of controlling the first relay so that the first output switch that was in an on state becomes off, then perform a second operation of controlling the second relay so that the second output switch that was in an off state becomes on, and perform a third operation of controlling the third relay so that the third output switch that was in an off state becomes on.

The first motor may enter a free-run state during a transition between the first operation and the second operation.

The control unit may control the relays such that, among the n motors, a maximum of one motor is connected to the three-phase (U, V, W) output of the inverter.

The control unit may receive, as a feedback value, a sensor value related to a condition of a target system to which the inverter is applied, and when the first motor is connected to the three-phase (R, S, T) output of the AC power source unit and the second motor is connected to the three-phase (U, V, W) output of the inverter, and the feedback value is greater than a preset reference value, the control unit may control the three-phase (U, V, W) output of the inverter so that an operating frequency of the second motor decreases to a certain level or lower.

If the feedback value remains greater than the preset reference value even after the operating frequency of the second motor has decreased to a certain level or lower, the control unit may control the relays so that the connection between the first motor and the three-phase (R, S, T) output of the AC power source unit is cut off.

The 2n relays may include a first relay configured to operate a first output switch provided between the first motor and the three-phase (R, S, T) output of the AC power source unit; and a second relay configured to operate a second output switch provided between the first motor and the three-phase (U, V, W) output of the inverter, and if the feedback value remains greater than the preset reference value even after the operating frequency of the second motor has decreased to a certain level or lower, the control unit may control the first relay so that the first output switch that was in an on state is turned off, and control the second relay so that the off state of the second output switch is maintained.

The target system may be a system that controls a fan or a pump, and the feedback value may be a pressure value, a hydraulic pressure value, or a flow rate value within the target system.

According to an embodiment of the present invention, a control method performed by an inverter in a system comprising: the inverter configured to convert supplied alternating current into a three-phase (U, V, W) output and output the same; n motors, where n is a natural number of 2 or more; 2n output switches, two of which are exclusively connected to each of the n motors and are configured to perform on/off operations such that each motor is selectively connected to either the three-phase (U, V, W) output of the inverter or a three-phase (R, S, T) output of an AC power source unit; and 2n relays configured to operate the on/off states of the respective output switches, the control method includes receiving a feedback value related to a condition of a target system to which the inverter is applied; and controlling the respective relays according to the received feedback value so that each motor is connected to either the three-phase (U, V, W) output of the inverter or the three-phase (R, S, T) output of the AC power source unit, wherein the controlling includes controlling the relays such that, at the start of operation of a motor in a stopped state, the motor is connected to the three-phase (U, V, W) output of the inverter.

The controlling may include, when it is necessary to start the operation of a second motor while a first motor is currently connected to the three-phase (U, V, W) output of the inverter, controlling the relays such that the connection of the first motor is switched to the three-phase (R, S, T) output of the AC power source unit, and then the second motor is connected to the three-phase (U, V, W) output of the inverter.

The controlling may include controlling the relays such that the two output switches dedicated to a single motor are not turned on at the same time.

The 2n relays may include a first relay configured to operate a first output switch provided between a first motor and the three-phase (R, S, T) output of the AC power source unit; a second relay configured to operate a second output switch provided between the first motor and the three-phase (U, V, W) output of the inverter; a third relay configured to operate a third output switch provided between a second motor and the three-phase (R, S, T) output of the AC power source unit; and a fourth relay configured to operate a fourth output switch provided between the second motor and the three-phase (U, V, W) output of the inverter.

When it is necessary to start the operation of the second motor while the first motor is currently connected to the three-phase (U, V, W) output of the inverter, the controlling may include controlling the first relay so that the first output switch that was in an on state is turned off; controlling the second relay so that the second output switch that was in an off state is turned on; and controlling the third relay so that the third output switch that was in an off state is turned on.

The controlling may include controlling the relays such that, among the n motors, a maximum of one motor is connected to the three-phase (U, V, W) output of the inverter.

The controlling may include, when a first motor is connected to the three-phase (R, S, T) output of the AC power source unit and a second motor is connected to the three-phase (U, V, W) output of the inverter, and the feedback value is greater than a reference value, controlling the three-phase (U, V, W) output of the inverter so that an operating frequency of the second motor decreases to a certain level or lower.

The controlling may include, when the feedback value remains greater than a preset reference value even after the operating frequency of the second motor has decreased to a certain level or lower, controlling the relays so that the connection between the first motor and the three-phase (R, S, T) output of the AC power source unit is cut off.

The 2n relays may include a first relay configured to operate a first output switch provided between the first motor and the three-phase (R, S, T) output of the AC power source unit; and a second relay configured to operate a second output switch provided between the first motor and the three-phase (U, V, W) output of the inverter, and when the feedback value remains greater than a preset reference value even after the operating frequency of the second motor has decreased to a certain level or lower, the controlling may include controlling the first relay so that the first output switch that was in an on state is turned off, and controlling the second relay so that the off state of the second output switch is maintained.

### [Advantageous Effects]

The present invention, configured as described above, provides the advantage of implementing a new type of soft start for multiple motors.

That is, the present invention enables soft start operation for each motor without requiring additional measures for soft start, thereby providing the advantage of preventing damage to the motors and the contact portions of the output switches caused by large inrush currents during direct-on-line starting.

In addition, when applied to a piping system, the present invention provides the advantage of preventing sudden changes in flow rate in the piping, thereby eliminating stress on the piping caused by pressure increase.

Furthermore, the present invention provides the advantage of reducing equipment costs and installation space by enabling a single inverter to control the operation of multiple motors, allowing the motors to be driven either directly by the inverter or by a commercial power source depending on the situation.

The effects of the present invention are not limited to those mentioned above, and other effects not mentioned will be clearly understood by those of ordinary skill in the art from the following description.

### [Description of Drawings]

FIG. 1 illustrates a schematic block diagram of an inverter system using a direct-on-line starting method according to the related art.
FIG. 2 illustrates an operation diagram of the direct-on-line starting performed in the system of FIG. 1.
FIG. 3 illustrates a schematic block diagram of an inverter system according to an embodiment of the present invention.
FIG. 4 illustrates a more detailed configuration diagram of FIG. 3.
FIG. 5 illustrates a flowchart of a soft start control method according to a first embodiment of the present invention.
FIG. 6 illustrates a flowchart of a soft start control method according to a second embodiment of the present invention.
FIG. 7 illustrates an operation diagram of the soft start control method according to the first and second embodiments of the present invention.
FIGs. 8 to 10 illustrate the states of the output switches 401, 402, ..., 406 and whether each motor 301, 302, 303 operates as a main motor or an auxiliary motor according to steps S101 to S103 of FIG. 4.
FIG. 11 illustrates an operation diagram of a soft start control method according to another embodiment of the present invention.

### [Mode for Invention]

The above-mentioned objects, means, and effects thereof of the present invention will become more apparent from the following detailed description in relation to the accompanying drawings, and accordingly, those skilled in the art to which the present invention belongs will be able to easily practice the technical spirit of the present invention. In addition, in describing the present invention, when it is determined that a detailed description of a related known technology may unnecessarily obscure the subject matter of the present invention, the detailed description will be omitted.

The terms used in this specification are for the purpose of describing embodiments only and are not intended to limit the present invention. In this specification, the singular forms "a,", "an," and "the" also include plural forms in some cases unless otherwise specified in the context. In this specification, terms such as "include", "comprise", "provide" or "have" do not exclude the presence or addition of one or more other elements other than elements mentioned.

In this specification, terms such as "or" and "at least one" may represent one of the words listed together or a combination of two or more thereof. For example, "A or B" and "at least one of A and B" may include only one of A or B, or may also include both A and B.

In this specification, descriptions according to "for example", etc. may not exactly match the information presented, such as the recited properties, variables, or values, and effects such as modifications, including tolerances, measurement errors, limits of measurement accuracy, and other commonly known factors should not limit the modes for carrying out the invention according to the various exemplary embodiments of the present invention.

In this specification, when an element is described as being "connected" or "linked" to another element, it will be understood that it may be directly connected or linked to the other element, but intervening elements may also be present. On the other hand, when an element is referred to as being "directly connected" or "directly linked" to another element, it will be understood that there are no intervening elements present.

In this specification, when an element is described as being "on" or "adjacent to" another element, it will be understood that it may be directly "on" or "connected to" the other element, but intervening elements may also be present. On the other hand, when an element is described as being "directly on" or "directly adjacent to" another element, it will be understood that there are no intervening elements present. Other expressions describing the relationship between the elements, for example, "between" and "directly between", and the like can be construed similarly.

In this specification, terms such as "first" and "second" may be used to describe various elements, but, the above elements should not be limited by the terms above. In addition, the above terms should not be construed as limiting the order of each element, and may be used for the purpose of distinguishing one element from another. For example, a "first element" may be named as a "second element" and similarly, a "second element" may also be named as a "first element."

Unless otherwise defined, all terms used in this specification may be used with meanings commonly understood by those of ordinary skill in the art to which the present invention belongs. In addition, terms defined in a commonly used dictionary are not interpreted ideally or excessively unless explicitly and specifically defined.

Hereinafter, a preferred embodiment according to the present invention will be described in detail with reference to the accompanying drawings.

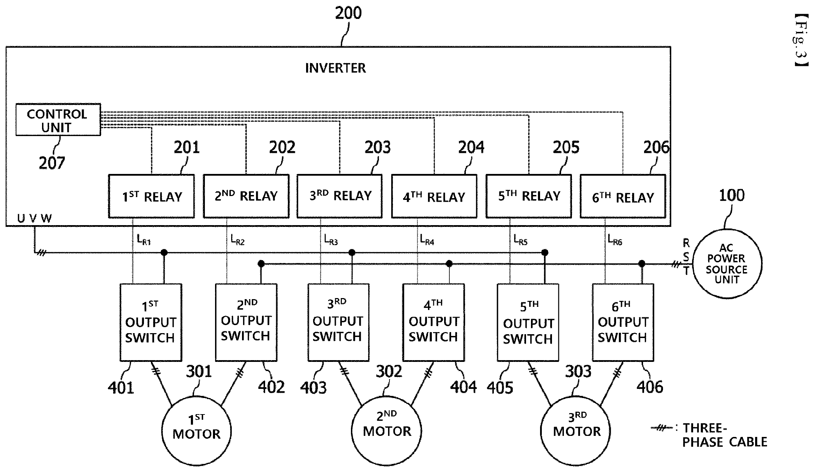

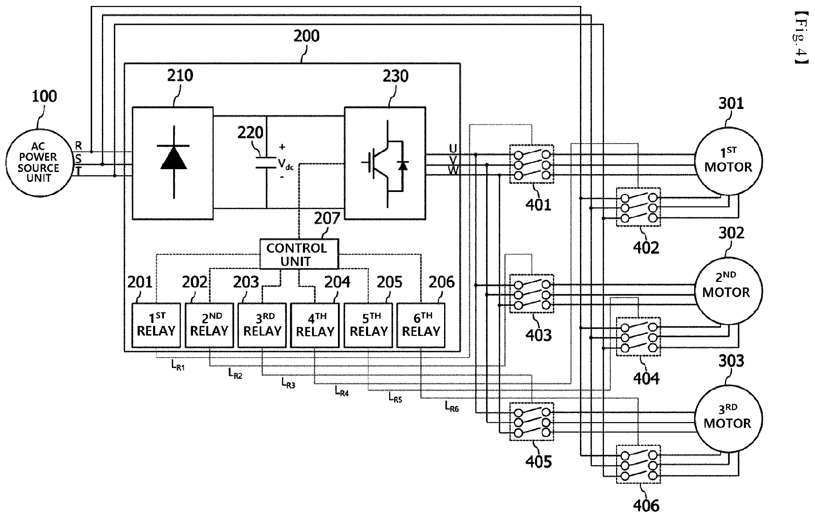

FIG. 3 illustrates a schematic block diagram of an inverter system according to an embodiment of the present invention, and FIG. 4 illustrates a more detailed configuration diagram of FIG. 3.

An inverter system according to an embodiment of the present invention hereinafter referred to as "the present system" includes: an AC power source unit 100 that supplies a three-phase (R, S, T) AC power; an inverter 200 that sequentially converts the supplied three-phase (R, S, T) AC power into direct current DC and then into three-phase (U, V, W) alternating current AC; a plurality of motors 301, 302, 303 that operate based on the three-phase (U, V, W) AC supplied from the inverter 200 or that are connected to the AC power source unit 100 to perform direct-on-line starting; and a plurality of output switches 401, 402, ... that are connected to either the cables of the three-phase (U, V, W) output of the inverter 200 or the cables of the three-phase (R, S, T) output of the AC power source unit 100, and perform on/off operations so that each motor 301, 302, 303 is connected to either the three-phase (U, V, W) output of the inverter 200 or the three-phase (R, S, T) output of the AC power source unit 100.

In particular, a plurality of motors 301, 302, 303 and a plurality of output switches 401, 402, ... are provided. That is, when n motors 301, 302, 303where n is a natural number of 2 or more are provided, 2n output switches 401, 402, ... are provided. In this case, two output switches are connected to one motor and operate exclusively for that motor.

Hereinafter, among the plurality of motors 301, 302, 303, a motor that is connected to the three-phase (U, V, W) output of the inverter 200 and directly controlled by the inverter 200 is referred to as a "main motor," and a motor that is connected to the three-phase (R, S, T) output of the AC power source unit 100 and performs direct-on-line starting is referred to as an "auxiliary motor." In addition, operation as a main motor is referred to as a "first operation," and operation as an auxiliary motor is referred to as a "second operation."

In addition, for convenience of explanation, the case where n = 3 will be described below; however, the present invention is not limited thereto. That is, output switches 1 and 2 401, 402 are connected to first motor 301 and operate exclusively for first motor 301. In addition, output switches 3 and 4 403, 404 are connected to second motor 302 and operate exclusively for second motor 302. Output switches 5 and 6 405, 406 are connected to third motor 303 and operate exclusively for third motor 303.

At this time, each of the output switches 401, 402, ... is connected to a three-phase cable and operates to switch the connection of each cable on/off. That is, each output switch 401, 402, ... includes three switching elements respectively connected to the three-phase cables.

The first output switch 401 is connected to the cable between the three-phase (U, V, W) output of the inverter 200 and the first motor 301, and connects or disconnects the three-phase (U, V, W) output of the inverter 200 and the first motor 301 depending on its on/off state. The second output switch 402 is connected to the cable between the three-phase output (R, S, T) of the AC power source unit 100 and the first motor 301, and connects or disconnects the three-phase output (R, S, T) of the AC power source unit 100 and the first motor 301 depending on its on/off state.

In addition, the third output switch 403 is connected to the cable between the three-phase (U, V, W) output of the inverter 200 and the second motor 302, and connects or disconnects the three-phase (U, V, W) output of the inverter 200 and the second motor 302 depending on its on/off state. The fourth output switch 404 is connected to the cable between the three-phase output (R, S, T) of the AC power source unit 100 and the second motor 302, and connects or disconnects the three-phase output (R, S, T) of the AC power source unit 100 and the second motor 302 depending on its on/off state.

In addition, the fifth output switch 405 is connected to the cable between the three-phase (U, V, W) output of the inverter 200 and the third motor 303, and connects or disconnects the three-phase (U, V, W) output of the inverter 200 and the third motor 303 depending on its on/off state. The sixth output switch 406 is connected to the cable between the three-phase output (R, S, T) of the AC power source unit 100 and the third motor 303, and connects or disconnects the three-phase output (R, S, T) of the AC power source unit 100 and the third motor 303 depending on its on/off state.

The on/off state of each of the output switches 401, 402, ... is determined by a relay signal transmitted from a corresponding dedicated relay 201, 202, ..., and the control of each relay 201, 202, ... is performed by the control unit 207 of the inverter 200.

That is, two relays operate exclusively for one motor. Specifically, the two relays may operate to connect the corresponding motor to the three-phase (U, V, W) output of the inverter 200 so that it performs the first operation as a main motor, or operate to connect the motor to the three-phase output (R, S, T) of the AC power source unit 100 so that it performs the second operation as an auxiliary motor.

At this time, a relay signal output from first relay 201, which is dedicated to the first motor 301, is transmitted to the first output switch 401 through a first relay cable LR1, and a relay signal output from second relay 202, which is also dedicated to the first motor 301, is transmitted to the second output switch 402 through a second relay cable LR2. In addition, a relay signal output from third relay 203, which is dedicated to the second motor 302, is transmitted to the third output switch 403 through a third relay cable LR3, and a relay signal output from fourth relay 204, which is also dedicated to the second motor 302, is transmitted to the fourth output switch 404 through a fourth relay cable LR4. Further, a relay signal output from fifth relay 205, which is dedicated to the third motor 302, is transmitted to the fifth output switch 405 through a fifth relay cable LR5, and a relay signal output from sixth relay 206, which is also dedicated to the third motor 302, is transmitted to the sixth output switch 406 through a sixth relay cable LR6.

For example, each switching element of the output switches 401, 402, ... may be implemented using a magnetic contactor (MC) or the like, but is not limited thereto.

The inverter 200 is a power conversion device that converts the three-phase (R, S, T) AC power input from the AC power source unit 100 into AC power having a voltage and frequency set according to given conditions and supplies it to the main motor. That is, the inverter 200 converts the input three-phase (R, S, T) AC power into direct current, and then converts the direct current into three-phase (U, V, W) AC power having a specified voltage and frequency, and supplies it to the main motor, thereby allowing at least one of the plurality of motors 301, 302, 303 serving as the main motor to be driven at a desired frequency. For example, the inverter 200 may control the magnitude and frequency of the three-phase AC power (U, V, W) supplied to the main motor, and may be applied to systems requiring variable-speed operation.

Referring to FIG. 4, the inverter 200 may include a converter unit 210, a DC link capacitor 220, an inverter unit 230, a plurality of relays 201, 202, 203, 204, 205, 206, and a control unit 207, among others.

The converter unit 210 is configured to rectify the three-phase (R, S, T) AC power input from the AC power source unit 100 and convert it into direct current. For example, the converter unit 210 may be configured to include a plurality of diodes, and may also be configured in an SCR-diode form connected to a silicon controlled rectifier (SCR) of an initial charging switch (not shown).

The DC link capacitor 220 is configured to charge the rectified DC voltage from the converter unit 210 in order to smooth the voltage, and the inverter unit 230 is configured to convert the DC voltage Vdc charged in the DC link capacitor 220 into three-phase AC voltage (U, V, W) to be supplied to the main motor. At this time, the inverter unit 230 may be configured with a plurality of control switching elements, and control of these elements may be performed by the control unit 207.

For example, the control switching elements may include a transistor, a metal-oxide-semiconductor field-effect transistor (MOSFET), an insulated gate bipolar transistor (IGBT), or a gate turn-off thyristor (GTO), but are not limited thereto. In addition, the inverter unit 230 may output an AC voltage with a magnitude and frequency modulated by a variable-frequency PWM.

Meanwhile, the inverter 200 may further include a first measurement unit (not shown), a second measurement unit (not shown), an initial charging resistor (not shown), an initial charging switch (not shown), and a regenerative braking unit (not shown), among others.

The first measurement unit may measure the voltage magnitude across both terminals of the DC link capacitor 220, that is, the magnitude of the charged voltage. To this end, the first measurement unit 251 may be configured to include a voltage detector.

The second measurement unit is configured to measure power factors output from the inverter unit 230, that is, applied to each of the three-phase cables (U, V, W) input to the main motor. Specifically, the second measurement unit may measure the current magnitude flowing through each of the three-phase cables (U, V, W). To this end, the second measurement unit may be configured to include a current detector.

In addition, if necessary, the second measurement unit may also measure the voltage magnitude applied to each of the three-phase cables (U, V, W), that is, the voltage magnitude of each cable with respect to ground (GND). In this case, the second measurement unit may be configured to include both a current detector and a voltage detector.

The initial charging resistor and the initial charging switch are configured to prevent an inrush current from being applied to the DC link capacitor 220 when power is applied. That is, when power is applied, the initial charging switch is turned off to suppress the inrush current through the initial charging resistor, and after the inrush current is suppressed, the initial charging switch is turned on to disconnect the initial charging resistor from the circuit. For example, the initial charging switch may be configured as a magnetic contactor (MC), or as a silicon controlled rectifier (SCR) connected to the diode of the upper leg of the converter unit 210.

In addition, the regenerative braking unit is a component required for performing regenerative braking operations and is capable of consuming regenerative energy generated by the motor 300. However, the regenerative energy generated by the main motor may be charged into the DC link capacitor 220, and if the DC voltage rises above a preset level due to regenerative operation or the like, the regenerative energy may be consumed through a resistor (not shown).

The control unit 207 is configured to control the operation of the inverter 200. For example, the control unit 207 may collect various information on power factors applied to each of the three-phase cables (U, V, W) output from the inverter 200, and control the voltage and frequency applied to each of the three-phase cables (U, V, W) connected to the motor 300 based on the collected information, thereby controlling various operations of the inverter 200. At this time, the control unit 207 may control the operation of each control switching element in the inverter unit 230 so that the voltage and frequency transmitted through each cable are adjusted accordingly.

In addition, the control unit 207 may control the execution of a soft start control method, which will be described later. To this end, the control unit 207 may control the operation of the relays 201, 202, ..., 206 according to a feedback value, thereby controlling the on/off state of each output switch 401, 402, ..., 406.

At this time, the feedback value may correspond to a sensor value detected externally. That is, in a system to which the inverter 200 is applied (hereinafter referred to as the "target system"), the sensor value detected by a sensor provided in the target system may serve as the feedback value. In this case, the sensor may detect the status of the target system as a sensor value, and the detected sensor value may be fed back to the inverter 200 of the present system in real time or within a certain period of time. In other words, the feedback value may be fed back to the control unit 207 of the inverter 200. It should be noted that the target system may be the present system itself or a system to which the present system is applied.

For example, the target system may be a system that controls the operation of a fan or a pump. That is, the target system may be a system that controls fans or pumps connected to the respective motors 301, 302, 303 through control of the motors 301, 302, 303. In this case, a sensor value corresponding to the current state (i.e., the current condition within the system) of items (pressure, hydraulic pressure, or flow rate or the like) handled by components included in the system-such as a fan, pump, passage, or pipeline-may serve as the feedback value. For instance, a pressure value applied by a pump included in the target system may be detected as a sensor value by a pressure sensor and fed back to the inverter 200. Alternatively, a hydraulic pressure value or flow rate value of fluid in a passage or pipeline included in the target system may be detected as a sensor value by a pressure gauge or flow meter and fed back to the control unit 207 of the inverter 200.

Meanwhile, the control unit 207 may control the operation of the relays 201, 202, ..., 206 so that at least one of the motors 301, 302, 303 serves as the main motor. In this case, the control unit 207 may control the driving of the control switching elements of the inverter unit 230, thereby controlling the magnitude and frequency of the three-phase voltage (U, V, W) output from the inverter unit 230 to the corresponding main motor.

In addition, the control unit 207 may further control the operation of the relays 201, 202, ..., 206 so that at least one of the remaining motors 301, 302, 303 serves as an auxiliary motor. That is, the control unit 207 may control the auxiliary motor to be connected to the AC power source unit 100 for direct-on-line starting.

The control unit 207 may include a processor and a memory. In this case, the memory may store a program for operating the processor and various data measured by the first and second measurement units. In particular, the memory may store a program related to the soft start control method, which will be described later.

For example, the memory may include a volatile memory such as a DRAM or an SRAM, or may include a non-volatile memory such as a PRAM, an MRAM, a ReRAM, a Read Only Memory (ROM), an Erasable Programmable Read Only Memory (EPROM), a flash memory, or the like, or may include a hard disk drive (HDD), a solid state drive (SSD), or the like, but is not limited thereto.

The processor performs various processing or control operations using the information stored in the memory. That is, the processor is responsible for various processing or control operations performed by the control unit 207, and may control the execution of the soft start control method, which will be described later.

Hereinafter, soft start control methods according to various embodiments of the present invention will be described.

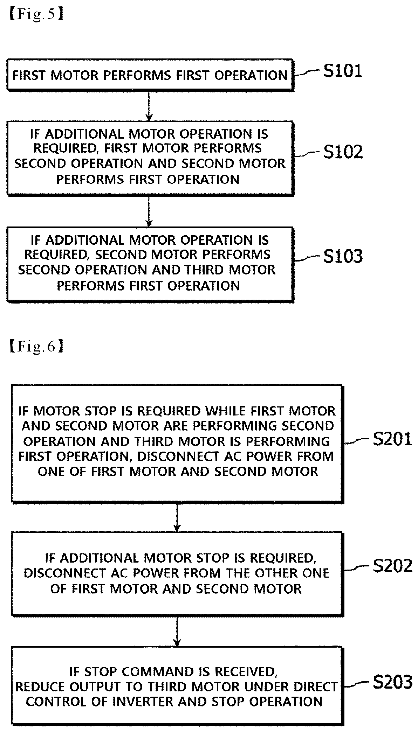

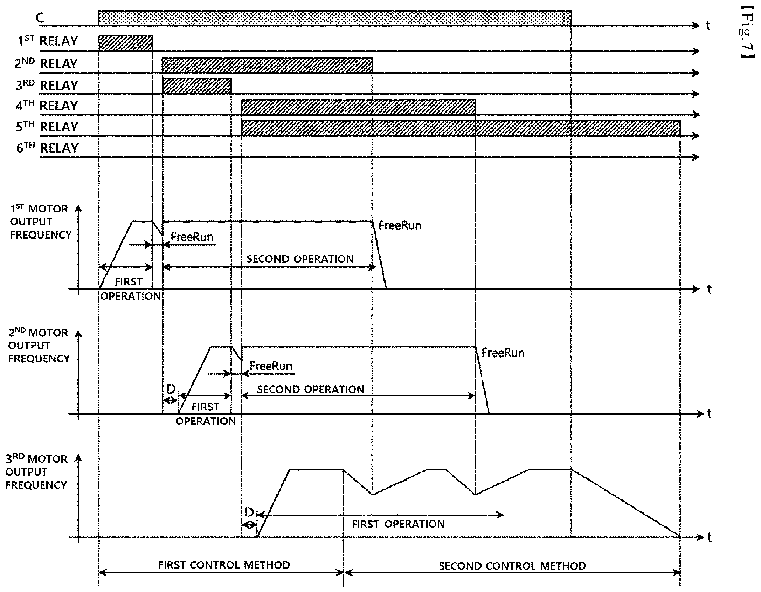

FIG. 5 illustrates a flowchart of a soft start control method according to a first embodiment of the present invention, and FIG. 6 illustrates a flowchart of a soft start control method according to a second embodiment of the present invention. In addition, FIG. 7 illustrates an operation diagram of the soft start control method according to the first and second embodiments of the present invention.

A soft start control method according to a first embodiment of the present invention (hereinafter referred to as "the first control method") relates to a method of sequentially operating a plurality of motors 301, 302, 302. In contrast, a soft start control method according to a second embodiment of the present invention (hereinafter referred to as "the second control method") relates to a method of sequentially stopping a plurality of motors 301, 302, 302 that are in operation.

The first and second control methods may include a first step of receiving a feedback value, and a second step of controlling the relays 201, 202, ... according to the received feedback value so that each motor 301, 302, 303 is connected to either the three-phase (U, V, W) output of the inverter 200 or the three-phase (R, S, T) output of the AC power source unit.

During the execution of the second step, the main motor-which is connected to the three-phase (U, V, W) output of the inverter 200 and whose operating frequency is directly controlled by the control unit 207 of the inverter 200 to perform the first operation-and the auxiliary motor-which is connected to the three-phase (R, S, T) output of the AC power source unit 100 and performs the second operation via direct-on-line starting-are not fixedly assigned, and may be switched depending on the situation. In this case, when a motor in a stopped state is to be driven, it is controlled to perform the first operation as the main motor. In addition, if the driving of an additional motor is required while the main motor is in operation, the current main motor is controlled to perform the second operation as an auxiliary motor, and one of the remaining motors in a stopped state is controlled to perform the first operation as the main motor.

At this time, in order for a given motor to perform the first operation as a main motor or the second operation as an auxiliary motor, the two relays dedicated to that motor are operated, thereby turning on or off the two output switches connected to those two relays and dedicated to the corresponding motor. However, control is performed such that the two output switches are not turned on at the same time. In addition, control is performed such that no more than one main motor is connected to the inverter 200 at the same time among the plurality of motors 301, 302, 303-that is, only one motor serves as the main motor at any given time.

First, the first control method is a method that enables soft start driving for each of the motors 301, 302, 302 without requiring additional soft start measures, thereby preventing damage to the motors and contact portions of the output switches caused by large inrush currents during direct-on-line starting. As illustrated in FIG. 5, the first control method may include steps S101 to S103. In this case, the execution of steps S101 to S103 may be controlled by the control unit 207.

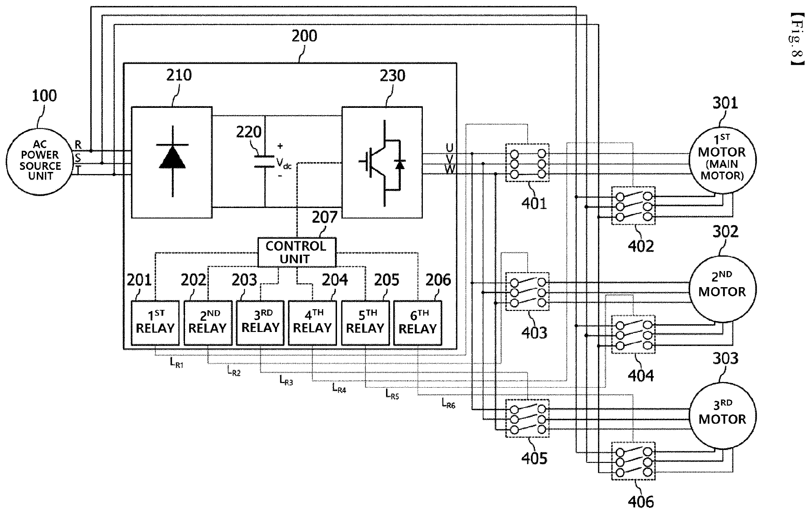

FIGs. 8 to 10 illustrate the states of the output switches 401, 402, ..., 406 and whether each motor 301, 302, 303 operates as a main motor or an auxiliary motor according to steps S101 to S103 of FIG. 4.

Referring to FIG. 7, when an operation command (C) is input to the inverter 200, the first motor 301 is controlled to perform the first operation as a main motor S101.

At this time, the control unit 207 may control the first relay 201 so that a relay signal is generated to turn the first output switch 401 on. Accordingly, as shown in FIG. 8, the first motor 301 is connected to the three-phase (U, V, W) output of the inverter 200 and operates as the main motor. That is, the first motor 301 performs the first operation, which is directly controlled by the inverter 200. In this case, a soft start operation may be performed such that the speed of the first motor 301 gradually increases.

Of course, the control unit 207 may control the remaining relays 202, 203, ... so that relay signals are generated to keep the remaining output switches 402, 403, ... in the off state.

Subsequently, if the feedback value is lower than a preset reference value, the control unit 207 controls the operation of the control switching elements of the inverter unit 230 until the operating frequency of the first motor 301, which is the main motor, reaches the maximum frequency. Accordingly, the output of the inverter 200 is controlled, allowing the operating frequency of the first motor 301 to increase up to the maximum frequency.

However, if the feedback value still remains lower than the preset reference value, operation of an additional motor is required. In this case, the first motor 301, which has been performing the first operation, is controlled to perform the second operation as an auxiliary motor, and the second motor 302, which has been inactive (i.e., in a stopped state), is controlled to perform the first operation as a main motor S102.

At this time, the control unit 207 may control the first relay 201 so that a relay signal is generated to turn the first output switch 401 off. Accordingly, the first motor 301 is disconnected from the three-phase (U, V, W) output of the inverter 200 and enters a free-run state for a short period of time.

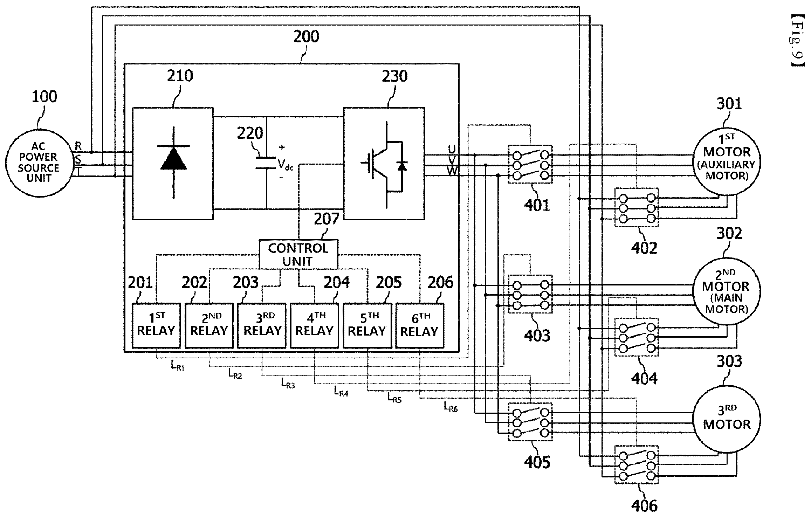

In addition, the control unit 207 may control the second relay 202 so that a relay signal is generated to turn the second output switch 402 on. Accordingly, as shown in FIG. 9, the first motor 301 transitions from the brief free-run state to being connected to the three-phase output (R, S, T) of the AC power source unit 100 and operates as an auxiliary motor. That is, the first motor 301 performs the second operation, which is a direct-on-line starting operation by being connected to the three-phase (R, S, T) output of the AC power source unit 100.

At this time, although the speed slightly decreases due to the free-run state, the first motor 301 is still operating at a frequency close to the maximum. Since it is connected to the three-phase (R, S, T) output of the AC power source unit 100 in this state, the inrush current generated in the first motor 301 during direct-on-line starting is reduced, unlike in the related art. As a result, damage to the first motor 301 and the contact portion of the second output switch 202 during direct-on-line starting can be prevented.

In addition, the control unit 207 may control the third relay 203 so that a relay signal is generated to turn the third output switch 403 on. Accordingly, as shown in FIG. 9, the second motor 302 is connected to the three-phase (U, V, W) output of the inverter 200 and operates as the main motor. That is, the second motor 302 performs the first operation, which is directly controlled by the inverter 200. In this case, a soft start operation may be performed such that the speed of the second motor 302 gradually increases.

However, even if the control unit 207 controls the relays 2 and 3 202, 203 almost simultaneously so that the second output switch 402 is turned off and the third output switch 403 is turned on, a certain delay time (D) may occur, depending on the procedural order of the control, until the point at which the operating frequency of the second motor 302, which is directly controlled by the inverter 200, begins to increase.

Of course, the control unit 207 may control the remaining relays 204, 205, 206 so that relay signals are generated to keep the remaining output switches 404, 405, 406 in the off state.

Subsequently, if the feedback value is lower than a preset reference value, the control unit 207 controls the operation of the control switching elements of the inverter unit 230 until the operating frequency of the second motor 302, which is the main motor, reaches the maximum frequency. Accordingly, the output of the inverter 200 is controlled, allowing the operating frequency of the second motor 302 to increase up to the maximum frequency.

However, if the feedback value still remains lower than the preset reference value, operation of an additional motor is required. In this case, the second motor 302, which has been performing the first operation, is controlled to perform the second operation as an auxiliary motor, and the third motor 303, which has been inactive, is controlled to perform the first operation as a main motor S103.

At this time, the control unit 207 may control the third relay 203 so that a relay signal is generated to turn the third output switch 403 off. Accordingly, the second motor 302 is disconnected from the three-phase (U, V, W) output of the inverter 200 and enters a free-run state for a short period of time.

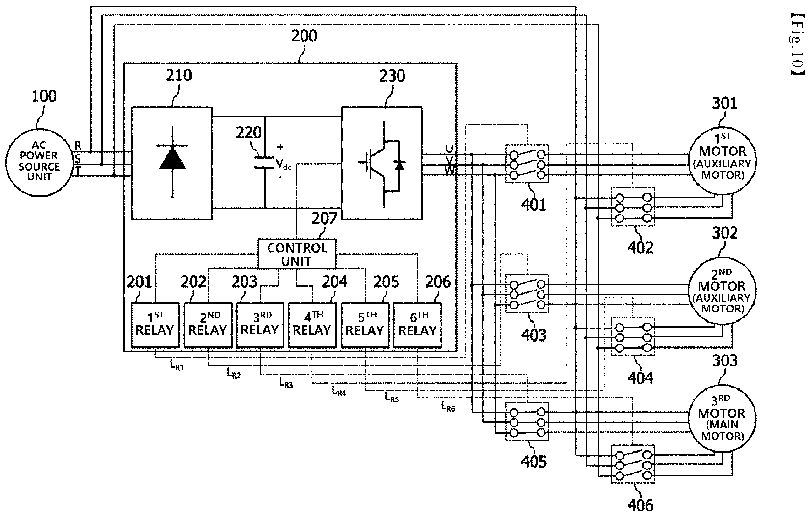

In addition, the control unit 207 may control the fourth relay 204 so that a relay signal is generated to turn the fourth output switch 404 on. Accordingly, as shown in FIG. 10, the second motor 302 transitions from the brief free-run state to being connected to the three-phase output (R, S, T) of the AC power source unit 100 and operates as an auxiliary motor. That is, the second motor 302 performs the second operation, which is a direct-on-line starting operation by being connected to the three-phase (R, S, T) output of the AC power source unit 100.

At this time, although the speed slightly decreases due to the free-run state, the second motor 302 is still operating at a frequency close to the maximum. Since it is connected to the three-phase (R, S, T) output of the AC power source unit 100 in this state, the inrush current generated in the second motor 302 during direct-on-line starting is reduced, unlike in the related art. As a result, damage to the second motor 302 and the contact portion of the fourth output switch 204 during direct-on-line starting can be prevented.

In addition, the control unit 207 may control the fifth relay 205 so that a relay signal is generated to turn the fifth output switch 405 on. Accordingly, as shown in FIG. 10, the third motor 303 is connected to the three-phase (U, V, W) output of the inverter 200 and operates as the main motor. That is, the third motor 303 performs the first operation, which is directly controlled by the inverter 200. In this case, a soft start operation is performed such that the speed of the third motor 303 gradually increases.

However, even if the control unit 207 controls the relays 4 and 5 204, 205 almost simultaneously so that the fourth output switch 404 is turned off and the fifth output switch 405 is turned on, a certain delay time D may occur, depending on the procedural order of the control, until the point at which the operating frequency of the third motor 303, which is directly controlled by the inverter 200, begins to increase.

Of course, the control unit 207 may control the remaining sixth relay 206 so that a relay signal is generated to keep the remaining sixth output switch 406 in the off state.

Subsequently, the control unit 207 may control the third motor 303 so that its operating frequency is adjusted according to the feedback value. For example, if the feedback value is lower than the preset reference value, the control unit 207 may control the operating frequency of the third motor 303 to increase, and if the feedback value is greater than the preset reference value, it may control the operating frequency of the third motor 303 to decrease.

Next, the second control method relates to a process of sequentially stopping a plurality of motors 301, 302, 302 that are in operation, and may be performed after the first control method has been executed. As shown in FIG. 6, the second control method may include steps S201 to S203. In this case, the execution of steps S201 to S203 may be controlled by the control unit 207.

Referring to FIG. 7, the operation command C continues to be maintained in the inverter 200, with the motors 1 and 2 301, 302 performing the second operation as auxiliary motors, and the third motor 303 performing the first operation as a main motor.

However, if the feedback value remains greater than the preset reference value, the control unit 207 controls the operation of the control switching elements of the inverter unit 230 until the operating frequency of the first motor 301, which is the main motor, reaches a certain frequency. Accordingly, the output of the inverter 200 is controlled, allowing the operating frequency of the third motor 303 to decrease to the specified frequency. As a result, if the feedback value is greater than the preset reference value, it becomes necessary to stop the operation of one of the auxiliary motors performing the second operation. In this case, the control unit 207 controls the AC power connection of one of the motors 1 and 2 301, 302, which are performing the second operation as auxiliary motors, to be cut off so that the corresponding motor is stopped S201.

For example, the operation of the first motor 301 may be controlled to stop. In this case, the control unit 207 may control the second relay 202 so that a relay signal is generated to turn the second output switch 402, which was in the on state, to the off state. Accordingly, the connection of the three-phase (R, S, T) output from the AC power source unit 100 to the first motor 301, which had been performing the second operation as an auxiliary motor, is cut off. As a result, the first motor 301 enters a free-run state and gradually comes to a stop.

Subsequently, the control unit 207 may control the operating frequency of the third motor 303, the main motor, which had been reduced to a certain frequency, to increase. Of course, the control unit 207 may also maintain the frequency at the certain level, depending on the feedback value.

Subsequently, if the feedback value is greater than the preset reference value, the control unit 207 controls the operation of the control switching elements of the inverter unit 230 until the operating frequency of the first motor 301, which is the main motor, reaches a certain frequency. Accordingly, the output of the inverter 200 is controlled, allowing the operating frequency of the third motor 303 to decrease to the specified frequency.

However, if the feedback value still remains greater than the preset reference value, it becomes necessary to stop the operation of the auxiliary motor performing the second operation. In this case, the control unit 207 controls the AC power connection of the other one of the motors 1 and 2 301, 302-that is, the motor performing the second operation as the auxiliary motor-to be cut off so that the corresponding motor is stopped S202.

For example, the operation of the second motor 302 may be controlled to stop. In this case, the control unit 207 may control the fourth relay 204 so that a relay signal is generated to turn the fourth output switch 404, which was in the on state, to the off state. Accordingly, the connection of the three-phase (R, S, T) output from the AC power source unit 100 to the second motor 302, which had been performing the second operation as an auxiliary motor, is cut off. As a result, the second motor 302 enters a free-run state and gradually comes to a stop.

Subsequently, the control unit 207 may control the operating frequency of the third motor 303, the main motor, which had been reduced to a certain frequency, to increase. At this time, the control unit 207 may control the third motor 303 so that its operating frequency is adjusted according to the feedback value. For example, if the feedback value is lower than the preset reference value, the control unit 207 may control the operating frequency of the third motor 303 to increase, and if the feedback value is greater than the preset reference value, it may control the operating frequency of the third motor 303 to decrease.

Subsequently, when a stop command is received (for example, when the previously maintained operation command (C) ends), the control unit 207 reduces the three-phase (U, V, W) output of the inverter 200, thereby gradually decreasing the output to the main motor, the third motor 301, which is directly controlled through the inverter 200, until the third motor 301 comes to a stop S203. That is, the operating frequency of the third motor 301 is gradually reduced until the third motor 301 comes to a stop.

At this time, the control unit 207 may control the fifth relay 205 so that a relay signal is generated to keep the fifth output switch 405 in the on state until the third motor 301 comes to a stop. Once the third motor 301 reaches a stopped state, the control unit 207 may control the fifth relay 205 so that a relay signal is generated to turn the fifth output switch 405, which was in the on state, to the off state. Accordingly, the three-phase (U, V, W) output of the inverter 200 to the third motor 303, which had performed the first operation as the main motor, is disconnected.

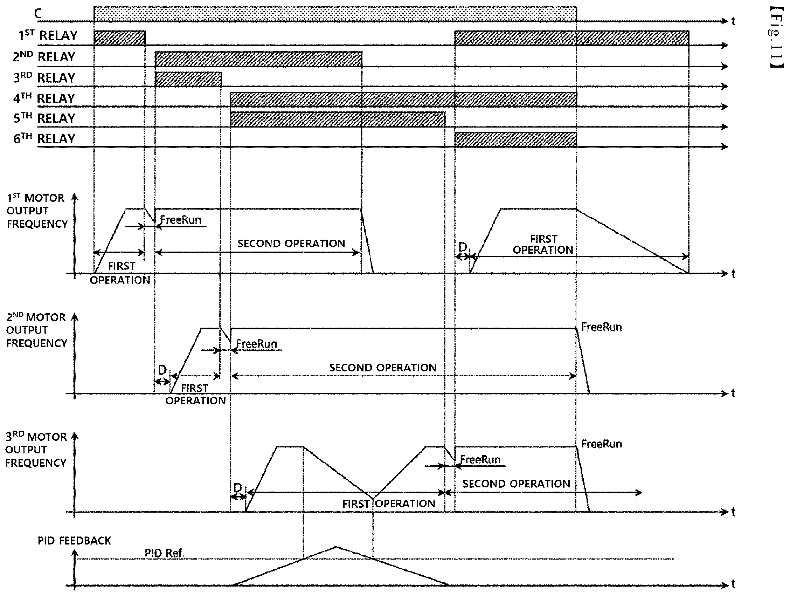

FIG. 11 illustrates an operation diagram of a soft start control method according to another embodiment of the present invention.

Of course, the soft start control method according to an embodiment of the present invention is not limited to the first and second control methods, and as illustrated in FIG. 11, the respective steps of the first and second control methods may be performed in combination according to a reference value (PID Ref.) of the PID feedback value.

In the case of FIG. 11, the following processes are sequentially included:
1) A process in which the first motor 301 performs the first operation as an operation command C is input to the inverter 200
2) A process in which the first motor 301 performs the second operation
3) A process in which the second motor 302 performs the first operation while the first motor 301 is performing the second operation
4) A process in which the second motor 302 performs the second operation
5) A process in which the third motor 303 performs the first operation while the motors 1 and 2 301, 302 are performing the second operation
6) A process in which the operation of the first motor 301, which had been performing the second operation, is stopped while the second motor 302 is performing the second operation and the third motor 303 is performing the first operation
7) A process in which the third motor 303 performs the second operation while the second motor 302 is performing the second operation
8) A process in which the first motor 301 performs the first operation while the motors 2 and 3 302, 303 are performing the second operation
9) A process in which the operation of the motors 2 and 3 302, 303 is stopped while the first motor 301 is performing the first operation
10) A process in which the operation of the first motor 301, which had been performing the first operation, is stopped as the operation command (C) input to the inverter 200 ends.

However, in the processes 1) to 10), the first and second operations of each motor 301, 302, 303, as well as the stopping processes, can be understood with reference to the above descriptions provided in the first and second control methods. Accordingly, a detailed description thereof will be omitted below.

As described above, the present invention provides the advantage of implementing a new type of soft start for multiple motors. That is, the present invention enables soft start operation for each motor without requiring additional measures for soft start, thereby providing the advantage of preventing damage to the motors and the contact portions of the output switches caused by large inrush currents during direct-on-line starting. In addition, when applied to a piping system, the present invention provides the advantage of preventing sudden changes in flow rate in the piping, thereby eliminating stress on the piping caused by pressure increase. Furthermore, the present invention provides the advantage of reducing equipment costs and installation space by enabling a single inverter to control the operation of multiple motors, allowing the motors to be driven either directly by the inverter or by a commercial power source depending on the situation.

In the detailed description of the present invention, although specific embodiments have been described, it is apparent that various modifications are possible without departing from the scope of the present invention. Therefore, the scope of the present invention is not limited to the described embodiments, and should be defined by the following claims and their equivalents.

### [Industrial Applicability]

The present invention relates to inverter control technology for multiple motors and provides control technology for an inverter capable of implementing soft start for multiple motors. Accordingly, the present invention has industrial applicability.

## Claims

1. An inverter in a system including n motors (where n is a natural number of 2 or more) and 2n output switches, in which two different output switches are exclusively connected to each motor, the inverter being configured to convert supplied alternating current into three-phase alternating current ((U, V, W)) and output the same, the inverter comprising:
2n relays configured to operate on/off states of the respective output switches; and
a control unit configured to control the respective relays to operate the on/off states of the respective output switches so that each motor is connected to either the three-phase ((U, V, W)) output of the inverter or the three-phase ((R, S, T)) output of an AC power source unit,
wherein the control unit controls the relays such that, at the start of operation of a motor in a stopped state, the corresponding motor is connected to the three-phase ((U, V, W)) output of the inverter.

2. The inverter of claim 1,
wherein, when it is necessary to start the operation of a second motor while a first motor is currently connected to the three-phase ((U, V, W)) output of the inverter, the control unit controls the relays such that the connection of the first motor is switched to the three-phase ((R, S, T)) output of the AC power source unit, and then the second motor is connected to the three-phase ((U, V, W)) output of the inverter.

3. The inverter of claim 1,
wherein the control unit controls the relays such that the two output switches dedicated to a single motor are not turned on at the same time.

4. The inverter of claim 2,
wherein the control unit receives, as a feedback value, a sensor value related to a condition of a target system to which the inverter is applied, and
the case in which it is necessary to start the operation of the second motor is a case where the feedback value remains less than a preset reference value even though the first motor currently connected to the three-phase ((U, V, W)) output of the inverter is operating at a maximum frequency.

5. The inverter of claim 1,
wherein the 2n relays include:
a first relay configured to operate a first output switch provided between a first motor and the three-phase ((R, S, T)) output of the AC power source unit;
a second relay configured to operate a second output switch provided between the first motor and the three-phase ((U, V, W)) output of the inverter;
a third relay configured to operate a third output switch provided between a second motor and the three-phase ((R, S, T)) output of the AC power source unit; and
a fourth relay configured to operate a fourth output switch provided between the second motor and the three-phase ((U, V, W)) output of the inverter,
wherein, when it is necessary to start the operation of the second motor while the first motor is currently connected to the three-phase ((U, V, W)) output of the inverter,
the control unit performs a first operation of controlling the first relay so that the first output switch that was in an on state becomes off,
then performs a second operation of controlling the second relay so that the second output switch that was in an off state becomes on,
and performs a third operation of controlling the third relay so that the third output switch that was in an off state becomes on.

6. The inverter of claim 5,
wherein the first motor enters a free-run state during a transition between the first operation and the second operation.

7. The inverter of claim 1,
wherein the control unit controls the relays such that, among the n motors, a maximum of one motor is connected to the three-phase ((U, V, W)) output of the inverter.

8. The inverter of claim 1,
wherein the control unit receives, as a feedback value, a sensor value related to a condition of a target system to which the inverter is applied, and
when the first motor is connected to the three-phase ((R, S, T)) output of the AC power source unit and the second motor is connected to the three-phase ((U, V, W)) output of the inverter, and the feedback value is greater than a preset reference value,
the control unit controls the three-phase ((U, V, W)) output of the inverter so that an operating frequency of the second motor decreases to a certain level or lower.

9. The inverter of claim 8,
wherein, if the feedback value remains greater than the preset reference value even after the operating frequency of the second motor has decreased to a certain level or lower,
the control unit controls the relays so that the connection between the first motor and the three-phase ((R, S, T)) output of the AC power source unit is cut off.

10. The inverter of claim 8,
wherein the 2n relays include:
a first relay configured to operate a first output switch provided between the first motor and the three-phase ((R, S, T)) output of the AC power source unit; and
a second relay configured to operate a second output switch provided between the first motor and the three-phase ((U, V, W)) output of the inverter,
wherein, if the feedback value remains greater than the preset reference value even after the operating frequency of the second motor has decreased to a certain level or lower,
the control unit controls the first relay so that the first output switch that was in an on state is turned off, and controls the second relay so that the off state of the second output switch is maintained.

11. The inverter of claim 4,
wherein the target system is a system that controls a fan or a pump, and the feedback value is a pressure value, a hydraulic pressure value, or a flow rate value within the target system.

12. A control method performed by an inverter in a system comprising:
the inverter configured to convert supplied alternating current into a three-phase ((U, V, W)) output and output the same;
n motors, where n is a natural number of 2 or more;
2n output switches, two of which are exclusively connected to each of the n motors and are configured to perform on/off operations such that each motor is selectively connected to either the three-phase ((U, V, W)) output of the inverter or a three-phase ((R, S, T)) output of an AC power source unit; and
2n relays configured to operate the on/off states of the respective output switches,
the control method comprising:
receiving a feedback value related to a condition of a target system to which the inverter is applied; and
controlling the respective relays according to the received feedback value so that each motor is connected to either the three-phase ((U, V, W)) output of the inverter or the three-phase ((R, S, T)) output of the AC power source unit,
wherein the controlling comprises controlling the relays such that, at the start of operation of a motor in a stopped state, the motor is connected to the three-phase ((U, V, W)) output of the inverter.

13. The control method of claim 12,
wherein the controlling includes, when it is necessary to start the operation of a second motor while a first motor is currently connected to the three-phase ((U, V, W)) output of the inverter, controlling the relays such that the connection of the first motor is switched to the three-phase ((R, S, T)) output of the AC power source unit, and then the second motor is connected to the three-phase ((U, V, W)) output of the inverter.

14. The control method of claim 12,
wherein the controlling includes controlling the relays such that the two output switches dedicated to a single motor are not turned on at the same time.

15. The control method of claim 13,
wherein the case in which it is necessary to start the operation of the second motor is a case where the feedback value is less than a reference value even when the first motor currently connected to the three-phase ((U, V, W)) output of the inverter is operating at a maximum frequency.

16. The control method of claim 12,
wherein the 2n relays include:
a first relay configured to operate a first output switch provided between a first motor and the three-phase ((R, S, T)) output of the AC power source unit;
a second relay configured to operate a second output switch provided between the first motor and the three-phase ((U, V, W)) output of the inverter;
a third relay configured to operate a third output switch provided between a second motor and the three-phase ((R, S, T)) output of the AC power source unit; and
a fourth relay configured to operate a fourth output switch provided between the second motor and the three-phase ((U, V, W)) output of the inverter,
wherein, when it is necessary to start the operation of the second motor while the first motor is currently connected to the three-phase ((U, V, W)) output of the inverter,
the controlling comprises:
controlling the first relay so that the first output switch that was in an on state is turned off;
controlling the second relay so that the second output switch that was in an off state is turned on; and
controlling the third relay so that the third output switch that was in an off state is turned on.

17. The control method of claim 12,
wherein the controlling includes controlling the relays such that, among the n motors, a maximum of one motor is connected to the three-phase ((U, V, W)) output of the inverter.

18. The control method of claim 12,
wherein the controlling includes, when a first motor is connected to the three-phase ((R, S, T)) output of the AC power source unit and a second motor is connected to the three-phase ((U, V, W)) output of the inverter, and the feedback value is greater than a reference value, controlling the three-phase ((U, V, W)) output of the inverter so that an operating frequency of the second motor decreases to a certain level or lower.

19. The control method of claim 18,
wherein the controlling includes, when the feedback value remains greater than the reference value even after the operating frequency of the second motor has decreased to a certain level or lower, controlling the relays so that the connection between the first motor and the three-phase ((R, S, T)) output of the AC power source unit is cut off.

20. The control method of claim 18,
wherein the 2n relays include:
a first relay configured to operate a first output switch provided between the first motor and the three-phase ((R, S, T)) output of the AC power source unit; and
a second relay configured to operate a second output switch provided between the first motor and the three-phase ((U, V, W)) output of the inverter,
wherein, when the feedback value remains greater than a preset reference value even after the operating frequency of the second motor has decreased to a certain level or lower, the controlling includes controlling the first relay so that the first output switch that was in an on state is turned off, and controlling the second relay so that the off state of the second output switch is maintained.
